# FASCICULE DE BREVET EUROPEEN

(11) **EP 4 687 137 B1**
(45) Date de publication et mention de la délivrance du brevet: **09.09.2026**
(21) Numéro de dépôt: 25190069.2
(22) Date de dépôt: 17.07.2025
(51) Int. Cl.: G10K 11/172, B32B 3/12, F02C 7/045, F02K 1/82

(54) **STRUCTURE D'ABSORPTION ACOUSTIQUE COMPRENANT DES CELLULES COMPARTIMENTÉES COMBINANT PLUSIEURS TYPES DE RÉSONATEURS**
SCHALLABSORBIERENDE STRUKTUR MIT UNTERTEILTEN ZELLEN, DIE MEHRERE ARTEN VON RESONATOREN KOMBINIERT
ACOUSTIC ABSORPTION STRUCTURE COMPRISING COMPARTMENTALIZED CELLS COMBINING MULTIPLE RESONATOR TYPES

(30) Priorité: 02.08.2024 FR 2408576
(43) Date de publication de la demande: 04.02.2026
(73) Titulaire: AIRBUS OPERATIONS (S.A.S.), 31060 Toulouse (FR)
(72) Inventeur: ROSSI, Léana, TOULOUSE (FR); PALANI, Suresh, TOULOUSE (FR); CARAZO MENDEZ, Arnulfo, TOULOUSE (FR); BOUKHORS, Kevin, TOULOUSE (FR); ALBERT, Maelle, TOULOUSE (FR)
(74) Mandataire: Airbus-OPS SAS

(56) Documents cités:
- EP-A1- 4 152 313
- EP-B1- 2 466 095
- US-B1- 9 514 734

## Description

La présente demande se rapporte à une structure d'absorption acoustique comprenant des cellules compartimentées combinant plusieurs types de résonateurs ainsi qu'à un aéronef comportant au moins une telle structure d'absorption acoustique.

Selon une configuration, un ensemble de propulsion d'aéronef comprend une nacelle ainsi qu'une turbomachine double flux, positionnée à l'intérieur de la nacelle, qui présente, à l'arrière, un conduit d'éjection primaire par lequel sont évacués les gaz brûlés issus de la combustion. Ce conduit d'éjection primaire comprend, au niveau de sa peau, une structure d'absorption acoustique pour atténuer le bruit sur plusieurs bandes de fréquences, comme les bruits liés à la combustion (300-1000Hz) et ceux liés au fonctionnement de la turbine (supérieurs ou égaux à 4000Hz).

Selon un premier mode de réalisation de l'art antérieur, une structure d'absorption acoustique comprend au moins une structure alvéolaire positionnée entre une couche acoustiquement résistive (poreuse) en contact avec un milieu dans lequel se propagent des ondes acoustiques et une couche réflectrice (imperméable). La structure alvéolaire comprend une multitude de cellules tubulaires chacune fermée à une première extrémité par la couche acoustiquement résistive et à une deuxième extrémité par la couche réflective. Ces cellules ne sont pas compartimentées et sont configurées pour généralement cibler une seule fréquence de résonance en fonction de la hauteur des cellules. Ce premier mode de réalisation permet d'obtenir un résonateur ¼ d'onde adapté pour atténuer des ondes sonores avec des fréquences élevées.

Ce premier mode de réalisation n'est pas pleinement satisfaisant car il ne permet de traiter qu'une faible plage de fréquences.

Selon un deuxième mode de réalisation de l'art antérieur, une structure d'absorption acoustique comprend des première et deuxième structures alvéolaires positionnées entre une couche acoustiquement résistive en contact avec un milieu dans lequel se propagent des ondes acoustiques et une couche réflectrice. Cette structure d'absorption acoustique comprend une cloison poreuse acoustiquement résistive intercalée entre les première et deuxième structures alvéolaires, la première structure alvéolaire étant intercalée entre la couche acoustiquement résistive et la cloison poreuse acoustiquement résistive, la deuxième structure alvéolaire étant intercalée entre la couche réflectrice et la cloison poreuse acoustiquement résistive.

Ce deuxième mode de réalisation permet d'obtenir deux types de résonateurs, un premier résonateur de type Helmholtz au niveau des cellules de la première structure alvéolaire, adapté pour atténuer les ondes sonores basses fréquences, ainsi qu'un deuxième résonateur de type ¼ d'ondes au niveau des cellules de la deuxième structure alvéolaire, adapté pour atténuer les ondes sonores hautes fréquences.

Même si ce deuxième mode de réalisation permet d'élargir la plage des fréquences des ondes acoustiques traitées, il n'est pas pleinement satisfaisant car la structure d'absorption acoustique présente une épaisseur importante.

Selon un troisième mode de réalisation de l'art antérieur illustré sur la figure 1 et décrit dans le document EP2466095, une structure d'absorption acoustique comprend une pluralité de cellules coudées 10, chaque cellule coudée 10 comportant un premier compartiment 10.1 qui s'étend selon une première direction entre une couche acoustiquement résistive 12 en contact avec un milieu dans lequel se propagent des ondes acoustiques et une cloison poreuse acoustiquement résistive 14, sensiblement parallèle à la couche acoustiquement résistive 12, ainsi qu'un deuxième compartiment 10.2 qui s'étend selon une deuxième direction sensiblement perpendiculaire à la première direction entre la cloison poreuse acoustiquement résistive 14 et une couche réflectrice 16.

Ce troisième mode de réalisation permet, comme le deuxième, d'obtenir deux types de résonateurs et d'élargir la plage des fréquences des ondes acoustiques traitées. Même si le fait de prévoir des cellules coudées 10 permet de réduire l'épaisseur de la structure d'absorption acoustique par rapport au deuxième mode de réalisation, ce troisième mode de réalisation n'est pas pleinement satisfaisant car la densité de surfaces au droit des cellules est relativement faible.

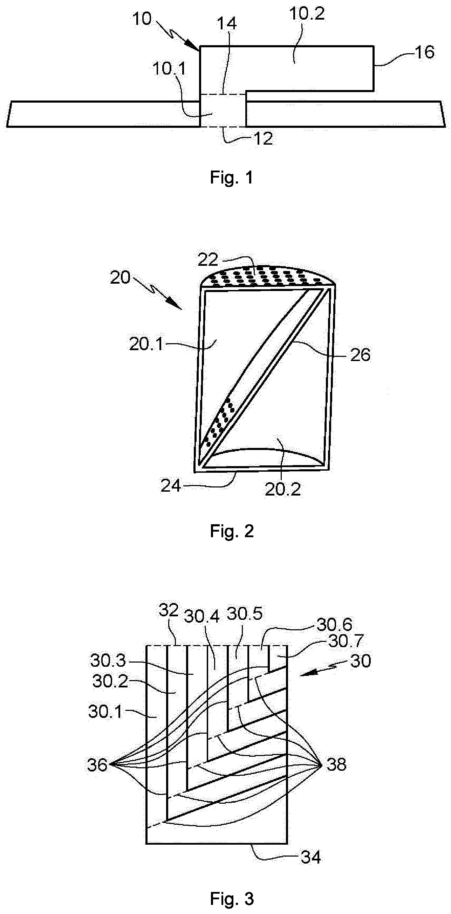

Selon un quatrième mode de réalisation de l'art antérieur illustré sur la figure 2, les cellules 20 d'une structure d'absorption acoustique sont positionnées entre une couche acoustiquement résistive 22 en contact avec un milieu dans lequel se propagent des ondes acoustiques et une couche réflectrice 24. Chaque cellule 20 comprend une cloison inclinée 26, poreuse au moins sur une zone, scindant la cellule 20 en deux compartiments 20.1, 20.2.

Comme les deuxième et troisième modes de réalisation, ce quatrième mode de réalisation permet d'obtenir dans chaque cellule 20 deux types de résonateurs et d'élargir la plage des fréquences des ondes acoustiques traitées.

Selon un cinquième mode de réalisation de l'art antérieur visible sur la figure 3, les cellules 30 d'une structure d'absorption acoustique sont positionnées entre une couche acoustiquement résistive 32 en contact avec un milieu dans lequel se propagent des ondes acoustiques et une couche réflectrice 34. Chaque cellule 30 comprend six cloisons en V 36 délimitant six compartiments coudés 30.1 à 30.6 et un compartiment droit 30.7. Chaque compartiment coudé 30.1 à 30.6 comprend une cloison poreuse acoustiquement résistive 38 scindant le compartiment coudé 30.1 à 30.6 en deux zones.

Compte tenu de la faible superficie de la cloison poreuse acoustiquement résistive 38 et de la section de passage minimale donnée des trous la traversant quel que soit leurs modes de fabrication, chaque cloison poreuse acoustiquement résistive 38 présente un taux d'ouverture relativement élevé, de l'ordre de 20%. Contrairement aux deuxième, troisième et quatrième modes de réalisation, les cloisons poreuses acoustiquement résistives 38 ne permettent pas d'obtenir deux types de résonateurs dans les différents compartiments coudés 30.1 à 30.6 en raison de leur taux d'ouverture trop élevé.

US 9 514 734 divulgue un revêtement acoustique large bande à structure en nid d'abeilles, comprenant une peau mince perforée et une plaque de fond, ledit revêtement comportant une section de cellules droites et une section de cellules coudées.

Quel que soit le mode de réalisation de l'art antérieur, il existe un besoin d'élargir la plage des fréquences des ondes acoustiques traitées.

A cet effet, l'invention a pour objet une structure d'absorption acoustique comportant une couche acoustiquement résistive, une couche réflectrice ainsi qu'une structure alvéolaire intercalée entre la couche acoustiquement résistive et la couche réflectrice, ladite structure alvéolaire comportant une première face en contact avec la couche acoustiquement résistive, une deuxième face en contact avec la couche réflectrice ainsi que des parois parallèles à une direction longitudinale qui délimitent des cellules débouchant chacune au niveau des première et deuxième faces.

Selon l'invention, la structure alvéolaire comprend, pour au moins une cellule :
a. au moins une et au plus trois cloisons en L, imperméables et espacées entre elles, qui présentent chacune des première et deuxième ailes reliées par une ligne de jonction, respectivement sensiblement parallèle à la direction longitudinale et perpendiculaire à la direction longitudinale, et délimitent un compartiment droit et au moins un compartiment en L,
b. dans chaque compartiment en L, une cloison poreuse acoustiquement résistive inclinée qui présente un taux d'ouverture inférieur ou égal à 15% et scinde le compartiment en L en des première et deuxième zones formant deux types de résonateurs.

Le fait de prévoir un nombre limité de cloisons en L permet d'obtenir, pour chaque cloison poreuse acoustiquement résistive inclinée, une surface suffisamment importante pour pouvoir avoir un taux d'ouverture inférieur à 20%, ce qui permet d'obtenir deux types de résonateurs dans chacun des premier et deuxième compartiments en L. Par ailleurs, le fait de prévoir des compartiments en L permet d'augmenter la distance parcourue par les ondes acoustiques dans ces derniers entre la couche acoustiquement résistive et la couche résistive tout en limitant l'épaisseur de la structure alvéolaire.

Cette solution permet d'augmenter la plage des fréquences des ondes acoustiques traitées.

Selon une autre caractéristique, les différentes cloisons poreuses acoustiquement résistives relient les différentes lignes de jonction des différentes cloisons en L, l'une des cloisons poreuses acoustiquement résistives étant tangente à la deuxième face de la structure alvéolaire.

Selon une autre caractéristique, chaque cellule comprend deux cloisons en L délimitant un compartiment droit et deux compartiments en L.

Selon une autre caractéristique, la deuxième aile de la première cloison en L et la couche acoustiquement résistive sont espacées d'une première distance, la deuxième aile de la deuxième cloison en L et la couche réflectrice étant espacées d'une deuxième distance, les deuxièmes ailes des première et deuxième cloisons en L étant espacées d'une troisième distance. En complément, chaque cellule présente une hauteur cellule ; les première, deuxième et troisième distances étant comprises entre 25% et 40% de la hauteur cellule de la cellule.

Selon une autre caractéristique, les première, deuxième et troisième distances sont sensiblement égales entre elles.

Selon une autre caractéristique, la première aile de la première cloison en L et la paroi sont espacées d'une première distance maximale, la première aile de la deuxième cloison en L et la paroi étant espacées d'une deuxième distance maximale, les premières ailes des première et deuxième cloisons en L étant espacées d'une troisième distance maximale. En complément, chaque cellule présente un diamètre cellule ; les première, deuxième et troisième distances maximales étant comprises entre 25% et 40% du diamètre cellule de la cellule.

Selon une autre caractéristique, les première, deuxième et troisième distances maximales sont sensiblement égales entre elles.

L'invention a également pour objet un aéronef comprenant au moins une structure d'absorption acoustique selon l'une des caractéristiques précédentes.

D'autres caractéristiques et avantages ressortiront de la description de l'invention qui va suivre, description donnée à titre d'exemple uniquement, en regard des dessins annexés parmi lesquels :
Fig. 1 est une représentation schématique d'une cellule d'une structure d'absorption acoustique illustrant un mode de réalisation de l'art antérieur,
Fig. 2 est une représentation schématique d'une cellule d'une structure d'absorption acoustique illustrant un autre mode de réalisation de l'art antérieur,
Fig. 3 est une représentation schématique d'une cellule d'une structure d'absorption acoustique illustrant un autre mode de réalisation de l'art antérieur,
Fig. 4 est une vue latérale d'un aéronef,
Fig. 5 est une coupe longitudinale d'une partie d'un ensemble de propulsion,
Fig. 6 est une représentation schématique en perspective d'une cellule d'une structure d'absorption acoustique illustrant un mode de réalisation de l'invention,
Fig. 7 est une coupe schématique de la cellule visible sur la figure 6,
Fig. 8 est une coupe en perspective d'une cellule d'une structure d'absorption acoustique illustrant un mode de réalisation de l'invention,
Fig. 9 est un diagramme montrant des courbes d'atténuation acoustique obtenues à partir des compartiments d'une cellule d'une structure d'absorption acoustique selon l'invention.

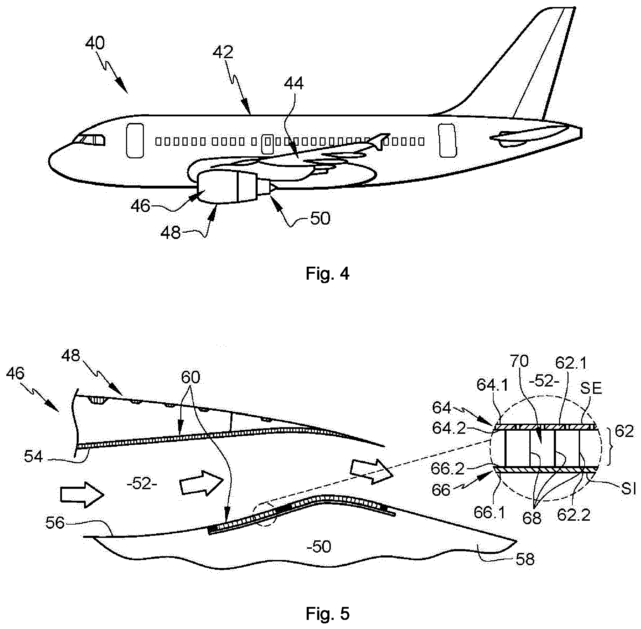

Sur la figure 4, on a représenté un aéronef 40 qui présente un fuselage 42, deux ailes 44 disposées de part et d'autre du fuselage 42 ainsi que des ensembles de propulsion 46 fixés sous les ailes 44. Chaque ensemble de propulsion 46 comprend une nacelle 48 et une turbomachine 50 positionnée à l'intérieur de la nacelle 48.

Selon un mode de réalisation visible sur la figure 5, la turbomachine 50 comprend, à l'arrière, un conduit d'éjection primaire 52, via lequel s'échappent des gaz brûlés dans la turbomachine 50, qui est délimité à l'extérieur par une paroi extérieure 54 et à l'intérieur par une paroi intérieure 56 prolongée par un cône de tuyère 58.

Selon une configuration, les parois extérieure et intérieure 54, 56 comprennent chacune au moins une structure d'absorption acoustique 60.

Chaque structure d'absorption acoustique 60 comprend une surface extérieure SE en contact avec un milieu dans lequel se propagent des ondes acoustiques et une surface intérieure SI opposée à la surface extérieure SE.

Bien que décrite appliquée à un conduit d'éjection primaire 52, l'invention n'est pas limitée à cette application. Ainsi, la structure d'absorption acoustique 60 peut être positionnée au niveau de toute paroi qui présente une surface extérieure SE en contact avec un milieu dans lequel se propagent des ondes sonores.

Chaque structure d'absorption acoustique 60 comprend au moins une structure alvéolaire 62 intercalée entre une couche acoustiquement résistive 64 perméable aux ondes sonores et une couche réflectrice 66 imperméable aux ondes sonores. La couche acoustiquement résistive 64 présente une première face 64.1 correspondant à la surface extérieure SE et une deuxième face 64.2 orientée vers la structure alvéolaire 62 et reliée à cette dernière. La couche réflectrice 66 présente une première face 66.1 correspondant à la surface intérieure SI et une deuxième face 66.2 orientée vers la structure alvéolaire 62 et reliée à cette dernière.

La couche acoustiquement résistive 64, la couche réflectrice 66, la liaison entre la couche acoustiquement résistive 64 et la structure alvéolaire 62 ainsi que la liaison entre la couche réflectrice 66 et la structure alvéolaire 62 ne sont pas plus décrites car elles peuvent être identiques à celles de l'art antérieur.

La structure alvéolaire 62 s'étend entre une première face 62.1 en contact avec la couche acoustiquement résistive 64 et une deuxième face 62.2 en contact avec la couche réflectrice 66 et comprend une multitude de parois 68 qui présentent chacune des premiers et deuxièmes bords positionnés respectivement au niveau des première et deuxième faces 62.1, 62.2. Ces parois 68 sont configurées pour délimiter des cellules 70 qui débouchent chacune au niveau des première et deuxième faces 62.1, 62.2.

Selon un mode de réalisation, les parois 68 sont tubulaires et parallèles à une direction longitudinale DL. Selon une configuration, les parois 68 sont cylindriques.

Selon un agencement, chaque cellule 70 présente un diamètre cellule D70 compris entre 9,6 et 19.1 mm et une hauteur cellule H70 comprise entre 30 et 70 mm.

Pour au moins une cellule, la structure alvéolaire 62 comprend au moins une cloison en L 72 qui présente une première aile 74 sensiblement parallèle à la direction longitudinale DL ainsi qu'une deuxième aile 76 sensiblement perpendiculaire à la direction longitudinale DL. Chaque cloison en L 72 est imperméable.

Pour chaque cloison en L 72, la première aile 74 est sensiblement rectangulaire et présente un premier bord transversal 74.1 situé au niveau de la première face 62.1, un deuxième bord transversal 74.2 sensiblement parallèle au premier bord transversal 74.1 et relié à la deuxième aile 76 ainsi que des premier et deuxième bords longitudinaux 74.3, 74.4 parallèles entre eux et reliés à la paroi 68. La deuxième aile 76 comprend un premier bord rectiligne 76.1 relié au deuxième bord transversal 74.2 au niveau d'une ligne de jonction 78 ainsi qu'un deuxième bord courbe 76.2 relié à la paroi 68.

La cloison en L 72 délimite un compartiment droit 70.1 vide délimité par une partie de la couche acoustiquement résistive 64, les première et deuxième ailes 74, 76 de la cloison en L 72 ainsi qu'une partie de la paroi 68, ledit compartiment droit 70.1 formant un résonateur ¼ d'onde adapté pour atténuer des ondes sonores avec des fréquences élevées.

La cellule 70 comprend au moins un compartiment en L 70.2 séparé du compartiment droit 70.1 par la cloison en L 72.

La structure alvéolaire 62 comprend, pour chaque compartiment en L 70.2, une cloison poreuse acoustiquement résistive 80 inclinée, positionnée dans le compartiment en L 70.2 et qui le sépare en des première et deuxième zones 80.1, 80.2 situées de part et d'autre de la cloison poreuse acoustiquement résistive 80. Cette cloison poreuse acoustiquement résistive 80 présente un taux d'ouverture inférieur ou égal à 15%, de préférence inférieur ou égal à 10%. Ainsi, les première et deuxième zones 80.1, 80.2 forment deux types de résonateurs, respectivement un premier résonateur de type Helmholtz adapté pour atténuer les ondes sonores basses fréquences ainsi qu'un deuxième résonateur de type ¼ d'ondes adapté pour atténuer les ondes sonores hautes fréquences.

Selon un mode de réalisation, la structure alvéolaire 62 comprend au plus trois cloisons en L espacées entre elles.

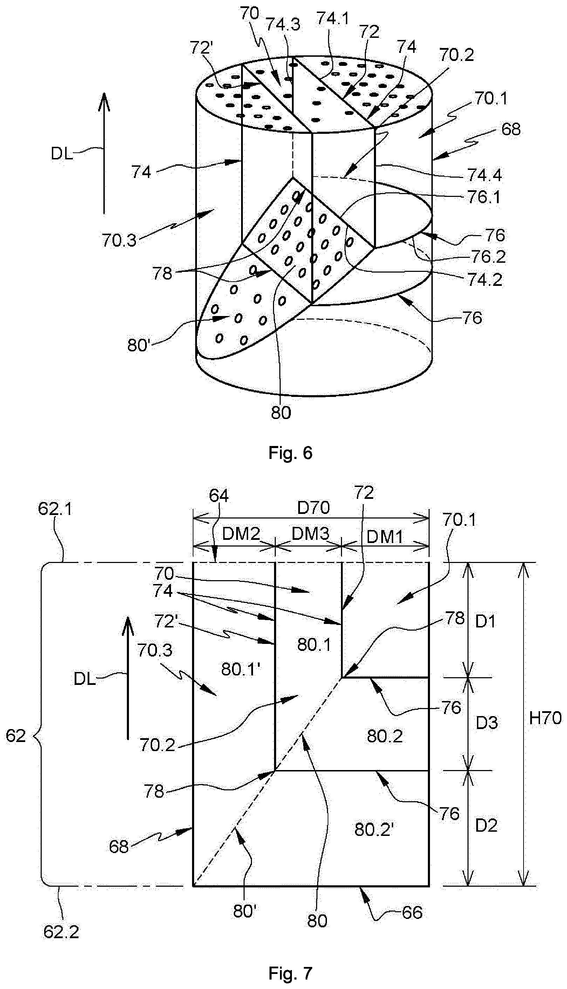

Idéalement, la structure alvéolaire 62 comprend :
a. deux cloisons en L 72, 72' espacées entre elles, comme illustré sur les figures 6 à 8, délimitant un compartiment droit 70.1 vide ainsi que des premier et deuxième compartiments en L 70.2, 70.3,
b. et, pour chacun des premier et deuxième compartiments en L 70.2, 70.3, une cloison poreuse acoustiquement résistive 80, 80' inclinée, une dans chaque compartiment en L 70.2, 70.3, les scindant chacun en des première et deuxième zones 80.1, 80.2, 80.1', 80.2' situées de part et d'autre de la cloison poreuse acoustiquement résistive 80, 80'.

Selon une configuration, les différentes cloisons poreuses acoustiquement résistives 80, 80' inclinées sont coplanaires et reliées aux différentes lignes de jonction 78 des différentes cloisons en L 72, 72', l'une des cloisons poreuses acoustiquement résistives 80' inclinées étant tangente à la deuxième face 62.2 de la structure alvéolaire 62.

La deuxième aile 76 de la première cloison en L 72 et la couche acoustiquement résistive 64 sont espacées d'une première distance D1 sensiblement égale à une deuxième distance D2 séparant la deuxième aile 76 de la deuxième cloison en L 72' et la couche réflectrice 66. Les deuxièmes ailes 76 des première et deuxième cloisons en L 72, 72' sont espacées d'une troisième distance D3 sensiblement égale aux première et deuxième distances D1, D2.

Les première, deuxième et troisième distances D1, D2, D3 sont comprises entre 25% et 40% de la hauteur cellule H70 de la cellule 70.

La première aile 74 de la première cloison en L 72 et la paroi 68 sont espacées d'une première distance maximale DM1 sensiblement égale à une deuxième distance maximale DM2 séparant la première aile 74 de la deuxième cloison en L 72' et la paroi 68. Les premières ailes 74 des première et deuxième cloisons en L 72, 72' sont espacées d'une troisième distance maximale DM3 sensiblement égale aux première et deuxième distances maximales DM1, DM2.

Les première, deuxième et troisième distances maximales DM1, DM2, DM3 sont comprises entre 25% et 40% du diamètre cellule D70 de la cellule 70.

Selon une configuration, la couche acoustiquement résistive 64 présente un taux d'ouverture sensiblement constant au droit de la cellule 70. En variante, la couche acoustiquement résistive 64 peut présenter un taux d'ouverture non constant au droit de la cellule 70. A titre d'exemple, les zones au droit du compartiment droit 70.1 et des premier et deuxième compartiments en L 70.2, 70.3 peuvent présenter des taux d'ouverture différents d'une zone à l'autre.

Chacune des cloisons poreuses acoustiquement résistives 80, 80' inclinées présentent un taux d'ouverture sensiblement constant. En variante, au moins une cloison poreuse acoustiquement résistive 80, 80' inclinée peut présenter un taux d'ouverture non constant.

L'invention permet d'obtenir dans une cellule 70 de faible hauteur plusieurs types de résonateurs. Le fait de prévoir un nombre limité de cloisons en L 72, au plus égal à trois, permet d'obtenir une surface pour chaque cloison poreuse acoustiquement résistive 80, 80' inclinée suffisamment importante pour pouvoir avoir un taux d'ouverture inférieur à 20%, ce qui permet d'obtenir deux types de résonateurs dans chacun des premier et deuxième compartiments en L 70.2, 70.3.

Enfin, le fait de prévoir des compartiments en L 70,2, 70.3 permet d'augmenter la distance parcourue par les ondes acoustiques dans ces derniers entre la couche acoustiquement résistive 64 et la couche résistive 66. Les différents compartiments en L 70.2, 70.3 étant imbriqués l'un dans l'autre, ils présentent des longueurs différentes, ce qui contribue à augmenter la plage des fréquences des ondes acoustiques traitées.

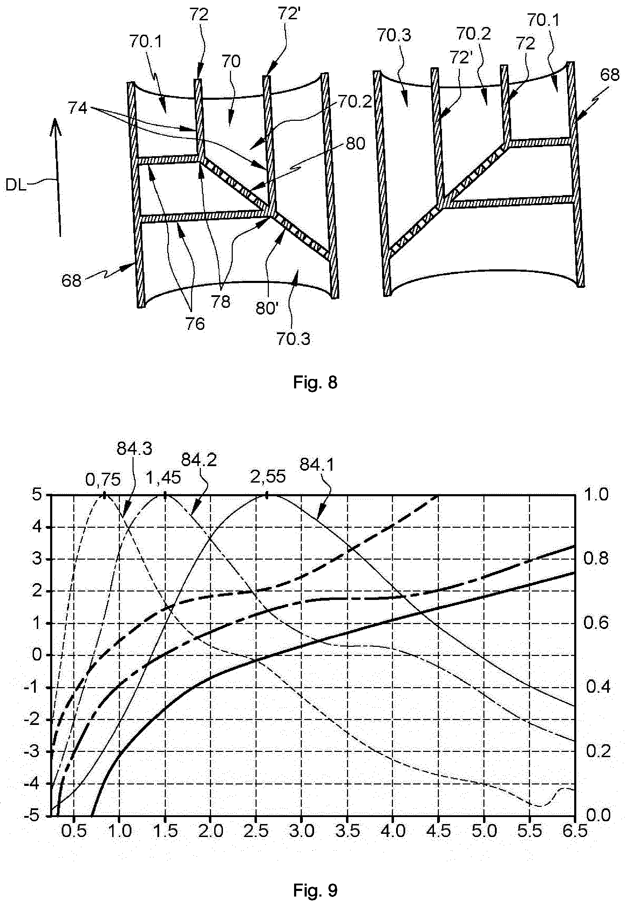

Dans le cas d'une cellule 70 présentant une hauteur cellule H70 de l'ordre de 40 mm, la distance parcourue par les ondes acoustiques est de l'ordre de 15 mm dans le compartiment droit 70.1, de l'ordre de 30 mm dans le premier compartiment en L 70.2 et de l'ordre de 57,5 mm dans le deuxième compartiment en L 70.3. Comme illustré sur la figure 9, le compartiment droit 70.1 permet d'obtenir une atténuation des ondes acoustiques qui suit une première courbe 84.1 présentant un pic pour une fréquence de l'ordre de 2,55 kHz. Le premier compartiment en L 70.2 permet d'obtenir une atténuation des ondes acoustiques qui suit une deuxième courbe 84.2 présentant un pic pour une fréquence de l'ordre de 1,45kHz. Enfin, le deuxième compartiment en L 70.3 permet d'obtenir une atténuation des ondes acoustiques qui suit une troisième courbe 84.3 présentant un pic pour une fréquence de l'ordre de 0,75 kHz.

## Revendications

1. Structure d'absorption acoustique comportant une couche acoustiquement résistive (64), une couche réflectrice (66) ainsi qu'une structure alvéolaire (62) intercalée entre la couche acoustiquement résistive (64) et la couche réflectrice (66), ladite structure alvéolaire (62) comportant une première face (62.1) en contact avec la couche acoustiquement résistive (64), une deuxième face (62.2) en contact avec la couche réflectrice (66) ainsi que des parois (68) parallèles à une direction longitudinale (DL), délimitant des cellules (70) qui débouchent chacune au niveau des première et deuxième faces (62.1, 62.2), la structure alvéolaire (62) comprenant, pour au moins une cellule (70),
- au moins une et au plus trois cloisons en L (72, 72'), imperméables et espacées entre elles, qui présentent chacune des première et deuxième ailes (74, 76) reliées par une ligne de jonction (78), respectivement sensiblement parallèle à la direction longitudinale (DL) et perpendiculaire à la direction longitudinale (DL), et délimitent un compartiment droit (70.1) et au moins un compartiment en L (70.2, 70.3),
la structure d'absorption acoustique étant **caractérisée en ce que** la structure alvéolaire (62) comprend également,
- dans chaque compartiment en L (70.2, 70.3), une cloison poreuse acoustiquement résistive (80, 80') inclinée qui présente un taux d'ouverture inférieur ou égal à 15% et scinde le compartiment en L (70.2, 70.3) en des première et deuxième zones (80.1, 80.2, 80.1', 80.2') formant deux types de résonateurs.

2. Structure d'absorption acoustique selon la revendication 1, **caractérisée en ce que** les différentes cloisons poreuses acoustiquement résistives (80, 80') relient les différentes lignes de jonction (78) des différentes cloisons en L (72, 72'), l'une des cloisons poreuses acoustiquement résistives (80') étant tangente à la deuxième face (62.2) de la structure alvéolaire (62).

3. Structure d'absorption acoustique selon l'une des revendications précédentes, **caractérisée en ce que** chaque cellule (70) comprend deux cloisons en L (72, 72') délimitant un compartiment droit (70.1) et deux compartiments en L (70.2, 70.3).

4. Structure d'absorption acoustique selon la revendication précédente, **caractérisée en ce que** la deuxième aile (76) de la première cloison en L (72) et la couche acoustiquement résistive (64) sont espacées d'une première distance (D1), **en ce que** la deuxième aile (76) de la deuxième cloison en L (72') et la couche réflectrice (66) sont espacées d'une deuxième distance (D2), **en ce que** les deuxièmes ailes (76) des première et deuxième cloisons en L (72, 72') sont espacées d'une troisième distance (D3) et **en ce que** chaque cellule (70) présente une hauteur cellule (H70) ; les première, deuxième et troisième distances (D1, D2, D3) étant comprises entre 25% et 40% de la hauteur cellule (H70) de la cellule (70).

5. Structure d'absorption acoustique selon la revendication précédente, **caractérisée en ce que** les première, deuxième et troisième distances (D1, D2, D3) sont sensiblement égales entre elles.

6. Structure d'absorption acoustique selon l'une des revendications 3 à 5, **caractérisé en ce que** la première aile (74) de la première cloison en L (72) et la paroi (68) sont espacées d'une première distance maximale (DM1), **en ce que** la première aile (74) de la deuxième cloison en L (72') et la paroi (68) sont espacées d'une deuxième distance maximale (DM2), **en ce que** les premières ailes (74) des première et deuxième cloisons en L (72, 72') sont espacées d'une troisième distance maximale (DM3) et **en ce que** chaque cellule (70) présente un diamètre cellule (D70) ; les première, deuxième et troisième distances maximales (DM1, DM2, DM3) étant comprises entre 25% et 40% du diamètre cellule (D70) de la cellule (70).

7. Structure d'absorption acoustique selon la revendication précédente, **caractérisée en ce que** les première, deuxième et troisième distances maximales (DM1, DM2, DM3) sont sensiblement égales entre elles.

8. Aéronef comprenant au moins une structure d'absorption acoustique selon l'une des revendications précédentes.

## Patentansprüche

1. Schallabsorptionsstruktur, umfassend eine akustisch resistive Schicht (64), eine reflektierende Schicht (66) sowie eine Wabenstruktur (62), die zwischen der akustisch resistiven Schicht (64) und der reflektierenden Schicht (66) angeordnet ist, die Wabenstruktur (62) umfassend eine in Kontakt mit der akustisch resistiven Schicht (64) stehende erste Seite (62.1), eine in Kontakt mit der reflektierenden Schicht (66) stehende zweite Seite (62.2) sowie parallel zu einer Längsrichtung (DL) verlaufende Wände (68), die Zellen (70) begrenzen, die jeweils an der ersten und zweiten Seite (62.1, 62.2) münden, die Wabenstruktur (62), für mindestens eine Zelle (70), umfassend
mindestens eine und höchstens drei L-förmige Trennwände (72, 72'), die undurchlässig sind und voneinander beabstandet sind und jeweils einen ersten und einen zweiten Schenkel (74, 76) aufweisen, die durch eine Verbindungslinie (78) verbunden sind, die im Wesentlichen parallel zu der Längsrichtung (DL) bzw. senkrecht zu der Längsrichtung (DL) verläuft, und die einen geraden Raum (70.1) und mindestens einen L-förmigen Raum (70.2, 70.3) begrenzen,
wobei die Schallabsorptionsstruktur **dadurch gekennzeichnet ist, dass** die Wabenstruktur (62) ferner in jedem L-förmigen Raum (70.2, 70.3) eine geneigte, akustisch resistive poröse Trennwand (80, 80') umfasst, die ein Öffnungsverhältnis kleiner oder gleich 15 % aufweist und den L-förmigen Raum (70.2, 70.3) in einen ersten und einen zweiten Bereich (80.1, 80.2, 80.1', 80.2') unterteilt, die zwei Arten von Resonatoren bilden.

2. Schallabsorptionsstruktur nach Anspruch 1, **dadurch gekennzeichnet, dass** die verschiedenen akustisch resistiven porösen Trennwände (80, 80') die verschiedenen Verbindungslinien (78) der verschiedenen L-förmigen Trennwände (72, 72') verbinden, wobei eine der akustisch resistiven porösen Trennwände (80') die zweite Seite (62.2) der Wabenstruktur (62) tangiert.

3. Schallabsorptionsstruktur nach einem der vorhergehenden Ansprüche, **dadurch gekennzeichnet, dass** jede Zelle (70) zwei L-förmige Trennwände (72, 72') umfasst, die einen geraden Raum (70.1) und zwei L-förmige Räume (70.2, 70.3) begrenzen.

4. Schallabsorptionsstruktur nach dem vorhergehenden Anspruch, **dadurch gekennzeichnet, dass** der zweite Schenkel (76) der ersten L-förmigen Trennwand (72) und die akustisch resistive Schicht (64) um einen ersten Abstand (D1) beabstandet sind, dass der zweite Schenkel (76) der zweiten L-förmigen Trennwand (72') und die reflektierende Schicht (66) um einen zweiten Abstand (D2) beabstandet sind, dass die zweiten Schenkel (76) der ersten und der zweiten L-förmigen Trennwand (72, 72') um einen dritten Abstand (D3) beabstandet sind und dass jede Zelle (70) eine Zellenhöhe (H70) aufweist; wobei der erste, zweite und dritte Abstand (D1, D2, D3) zwischen 25 % und 40 % der Zellenhöhe (H70) der Zelle (70) betragen.

5. Schallabsorptionsstruktur nach dem vorhergehenden Anspruch, **dadurch gekennzeichnet, dass** der erste, zweite und dritte Abstand (D1, D2, D3) im Wesentlichen untereinander gleich sind.

6. Schallabsorptionsstruktur nach einem der Ansprüche 3 bis 5, **dadurch gekennzeichnet, dass** der erste Schenkel (74) der ersten L-förmigen Trennwand (72) und die Wand (68) um einen ersten maximalen Abstand (DM1) beabstandet sind, dass der erste Schenkel (74) der zweiten L-förmigen Trennwand (72') und die Wand (68) um einen zweiten maximalen Abstand (DM2) beabstandet sind, dass die ersten Schenkel (74) der ersten und der zweiten L-förmigen Trennwand (72, 72') um einen dritten maximalen Abstand (DM3) beabstandet sind und dass jede Zelle (70) einen Zellendurchmesser (D70) aufweist; wobei der erste, zweite und dritte maximale Abstand (DM1, DM2, DM3) zwischen 25 % und 40 % des Zellendurchmessers (D70) der Zelle (70) betragen.

7. Schallabsorptionsstruktur nach dem vorhergehenden Anspruch, **dadurch gekennzeichnet, dass** der erste, zweite und dritte maximale Abstand (DM1, DM2, DM3) im Wesentlichen untereinander gleich sind.

8. Luftfahrzeug, das mindestens eine Schallabsorptionsstruktur nach einem der vorhergehenden Ansprüche umfasst.

## Claims

1. Acoustic absorption structure comprising an acoustically resistive layer (64), a reflective layer (66), and a cellular structure (62) interposed between the acoustically resistive layer (64) and the reflective layer (66), said cellular structure (62) comprising a first face (62.1) in contact with the acoustically resistive layer (64), a second face (62.2) in contact with the reflective layer (66), and walls (68) parallel to a longitudinal direction (DL), delimiting cells (70) which each open out at the first and second faces (62.1, 62.2), the cellular structure (62) comprising, for at least one cell (70),
at least one and at most three L-shaped partitions (72, 72') which are impermeable and spaced apart from one another, each have first and second wings (74, 76) connected by a joining line (78), respectively substantially parallel to the longitudinal direction (DL) and perpendicular to the longitudinal direction (DL), and delimit a straight compartment (70.1) and at least one L-shaped compartment (70.2, 70.3),
the acoustic absorption structure being **characterized in that** the cellular structure (62) also comprises,
in each L-shaped compartment (70.2, 70.3), an inclined acoustically resistive porous partition (80, 80') which has a degree of openness less than or equal to 15% and divides the L-shaped compartment (70.2, 70.3) into first and second zones (80.1, 80.2, 80.1', 80.2') forming two types of resonators.

2. Acoustic absorption structure according to Claim 1, **characterized in that** the different acoustically resistive porous partitions (80, 80') connect the different joining lines (78) of the different L-shaped partitions (72, 72'), one of the acoustically resistive porous partitions (80') being tangential to the second face (62.2) of the cellular structure (62).

3. Acoustic absorption structure according to either of the preceding claims, **characterized in that** each cell (70) comprises two L-shaped partitions (72, 72') delimiting a straight compartment (70.1) and two L-shaped compartments (70.2, 70.3).

4. Acoustic absorption structure according to the preceding claim, **characterized in that** the second wing (76) of the first L-shaped partition (72) and the acoustically resistive layer (64) are spaced apart by a first distance (D1), **in that** the second wing (76) of the second L-shaped partition (72') and the reflective layer (66) are spaced apart by a second distance (D2), **in that** the second wings (76) of the first and second L-shaped partitions (72, 72') are spaced apart by a third distance (D3), and **in that** each cell (70) has a cell height (H70); the first, second and third distances (D1, D2, D3) being between 25% and 40% of the cell height (H70) of the cell (70).

5. Acoustic absorption structure according to the preceding claim, **characterized in that** the first, second and third distances (D1, D2, D3) are substantially equal to one another.

6. Acoustic absorption structure according to any of Claims 3 to 5, **characterized in that** the first wing (74) of the first L-shaped partition (72) and the wall (68) are spaced apart by a first maximum distance (DM1), **in that** the first wing (74) of the second L-shaped partition (72') and the wall (68) are spaced apart by a second maximum distance (DM2), **in that** the first wings (74) of the first and second L-shaped partitions (72, 72') are spaced apart by a third maximum distance (DM3), and **in that** each cell (70) has a cell diameter (D70); the first, second and third maximum distances (DM1, DM2, DM3) being between 25% and 40% of the cell diameter (D70) of the cell (70).

7. Acoustic absorption structure according to the preceding claim, **characterized in that** the first, second and third maximum distances (DM1, DM2, DM3) are substantially equal to one another.

8. Aircraft comprising at least one acoustic absorption structure according to any of the preceding claims.
